# EUROPEAN PATENT APPLICATION

(11) **EP 3 812 695 A1**
(43) Date of publication of application: **28.04.2021**
(21) Application number: 20201244.9
(22) Date of filing: 12.10.2020
(51) Int. Cl.: G01B 3/50, G01B 3/46

(54) **GAUGE**

(30) Priority: 24.10.2019 GB 201915424
(71) Applicant: Rolls-Royce plc, London N1 9FX (GB)
(72) Inventor: Burton, Jonathan, Derby, Derbyshire DE24 8BJ (GB); Hook, David, Derby, Derbyshire DE24 8BJ (GB)
(74) Representative: Rolls-Royce plc

(57) **Abstract**

A gauge comprising an elongate rod and a head. The rod has an elongate axis. The head has a transverse dimension perpendicular to the elongate axis of the rod. The gauge has an insertion configuration and an inspection configuration, wherein the transverse dimension of the head is greater in the inspection configuration than in the insertion configuration. The head comprises two head portions each with a longitudinally-extending outer surface and a longitudinally-extending inner surface and, in the insertion configuration, the inner surfaces of the head portions are at least partly in abutment with each other. The gauge can be used in a method of measuring an internal dimension of a bore within a component.

## Description

### Field of the Disclosure

The present disclosure relates to a gauge and in particular to a gauge for assessing the internal dimensions of a component. The present disclosure also relates to a method of using the gauge to assess the internal dimensions of a component, e.g. a gas turbine engine component.

### Background

There is often the need to measure the internal dimensions of a component e.g. to ensure that the dimensions are within acceptable tolerances. This quality control is essential to ensure optimum and/or safe performance of the component.

Such measurement of internal dimensions can be problematic where the component has a complex geometry rendering the internal dimension inaccessible. In particular, where access to the internal dimension for measurement is limited by a restricted portion (having reduced dimensions), use of many of the known gauges may be prevented.

For example, known go/no go plug gauges are used to measure the internal dimensions of a bore and typically comprise a rod having cylindrical plugs at opposing ends. One of the plugs (the 'go' plug) is of a smaller diameter than the other (the 'no go' plug). The 'go' plug must fit into the bore and the 'no go' plug must not fit into the bore for the component to pass the quality control test. If the portion of the bore requiring measurement is beyond a restriction, such a go/no gauge cannot be used as the both plugs will be prevented from passing the restriction.

Similarly, known sprung internal bore callipers cannot easily access internal dimensions of complex components and, furthermore, can only provide local point measurements thus necessitating multiple point measurements in order to ensure full assessment of the internal dimension.

Whilst known methods such as CT scanning and flow measurement can be used where access is restricted, these methods are time consuming and costly.

Destructive methods where sacrificial components are destroyed during measurement are wasteful.

It is critical that internal dimensions of gas turbine components meet predefined requirements for safe and optimum performance of the gas turbine engine. Nozzle guide vane vents and scavenge oil pipes are examples of gas turbine engine components that present difficulties in such quality control processes. These pipes include weld beads and checking the maximum dimensions of the weld bead and thus the minimum area of the pipe is hampered by restrictions in the pipe geometry.

An improved method for measuring internal dimensions of a component e.g. a gas turbine engine component such as a nozzle guide vane vent and scavenge oil pipe is needed.

### Summary

The present disclosure provides a gauge and a method of measuring an internal dimension of a bore within a component, as set out in the appended claims.

According to a first aspect of the disclosure there is provided a gauge comprising an elongate rod and a head; the rod has an elongate axis; the head has a transverse dimension perpendicular to the elongate axis of the rod; and the gauge has an insertion configuration and an inspection configuration, wherein the transverse dimension of the head is greater in the inspection configuration than in the insertion configuration; characterised in that the head comprises two head portions each with a longitudinally-extending outer surface and a longitudinally-extending inner surface and, in the insertion configuration, the inner surfaces of the head portions are at least partly in abutment with each other.

By providing a gauge having a head that has a reduced transverse dimension in an insertion configuration, the head can pass a restricted portion within a bore within a component (e.g. a bore within an vent and oil scavenge pipe) and then be expanded to the inspection configuration to ensure that the portion of the bore beyond the restriction meets the minimum required dimension (cross-sectional area) required for effective operation of the component.

The outer surfaces may be chamfered towards an end face of the head (distal the rod) to prevent the end faces snagging on the weld bead geometry or surface to be measured. The outer surfaces may additionally or alternatively be chamfered towards the rod.

The outer surfaces may be at least partly curved such that the head has a circular or oval or obround end face at least in the insertion configuration. For example, the outer surface of each head portion may have a curved end portion and substantially planar front and rear portions, the front and rear portions being spaced by the inner surface.

The two head portions may be symmetrical head portions.

The inner surfaces of the head portions may be spaced from each other in a transverse direction (perpendicular to the elongate axis of the rod) in the inspection configuration. This spacing increases the transverse dimension of the head in the inspection configuration.

In some embodiments, the gauge further comprises an insert for spacing the inner surfaces of the head portions in the inspection configuration.

In some embodiments, a transverse dimension of the rod (perpendicular to the elongate axis of the rod) is greater in the inspection configuration than in the insertion configuration.

In some embodiments, the rod comprises two rod portions e.g. two symmetrical rod portions each with a longitudinally-extending outer surface and longitudinally-extending inner surface. In the insertion configuration, the inner surfaces of the rod portions are at least partly in abutment with each other.

Where the rod comprises two rod portions e.g. two symmetrical rod portions, the inner surfaces of the rod portions may be spaced from each other in a transverse direction in the inspection configuration.

In some embodiments, the insert is an elongate insert and spaces both the inner surfaces of the head portions and the inner surfaces of the rod portions in the inspection configuration.

In some embodiments, each head portion is integrally formed with a respective rod portion. In these embodiments, the inner surfaces of the head portions are each continuous with the inner surface of the respective rod portion.

In some embodiments, the inner surface of the head/rod portions define a bore (e.g. a central/axial bore) therebetween in the insertion configuration for receiving the insert for conversion to the inspection configuration.

The inner surface of each head/rod portion may comprise an elongate channel e.g. a centrally disposed elongate channel, the opposing channels abutting to form the bore e.g. the central bore through the head and elongate rod. Each channel may have a v-shaped transverse profile (perpendicular to the elongate axis of the channel). Where the channels are v-shaped, the (central) bore will have a substantially square transverse profile.

The insert, e.g. the elongate insert may have opposing longitudinally-extending transverse surfaces which, in the inspection configuration abut the inner surfaces of the head/rod portions. The insert may also have opposing front and rear surfaces (spacing the transverse surfaces). The front and rear surfaces may be chamfered towards an end face of the insert (proximal the head) to prevent the end faces snagging on the weld bead or surface to be measured. The front and rear surfaces may additionally/alternatively be chamfered towards the rod.

Each transverse surface of the insert may have an elongate ridge e.g. a centrally disposed elongate ridge. It may have a v-shaped transverse profile (perpendicular to the elongate axis of the ridge). Thus in the inspection configuration, the opposing ridges may be received in the channels on the inner surfaces of the head/rod portions. This assists with alignment of the insert between the head/rod portions.

Upon insertion of the insert to convert the gauge to the inspection configuration, the front and rear surfaces of the insert may be flush with the outer surfaces of the head portions (e.g. with the front and rear portions of the outer surfaces of the head portions) and may extend the perimeter/transverse dimension of the head.

In a second aspect of the disclosure, there is provided a method of measuring an internal dimension of a bore in a component, the method comprising the steps of: providing a gauge according to the first aspect in the insertion configuration of the gauge; inserting the gauge into the bore until the head is positioned at the position to be inspected; converting the gauge to its inspection configuration; and determining if the position of the bore to be inspected has a greater dimension than the transverse dimension of the head.

In some embodiments, converting the gauge to its inspection configuration comprises moving the inner surfaces of the head portions from abutment with each other such that they are spaced from each other in a transverse dimension.

In some embodiments, the method comprises providing a gauge further comprising an insert and converting the gauge to its inspection configuration comprises spacing the inner surfaces of the head portions with the insert.

In some embodiments, method comprises providing the inner surface of each head portion with an elongate channel and providing the insert with opposing longitudinally-extending transverse surfaces each having an elongate ridge and wherein converting the gauge to its inspection configuration comprises seating the opposing ridges within the channels on the inner surfaces of the head portions.

In some embodiments, the bore is a bore within a gas turbine engine component. The gas turbine engine component may be a nozzle guide vane vent and scavenge oil pipe.

The skilled person will appreciate that except where mutually exclusive, a feature or parameter described in relation to any one of the above aspects may be applied to any other aspect. Except where mutually exclusive, any of the features may be employed separately or in combination with any other features and the disclosure extends to and includes all combinations and sub-combinations of one or more features described herein.

### Brief Description of the Drawings

Embodiments will now be described by way of example only, with reference to the Figures, in which:
**Figure 1** is perspective view of the gauge in the inspection configuration;
**Figure 2** is a perspective view of the head of the gauge in the inspection configuration; and
**Figure 3** is a top view of the gauge within a component bore in the inspection configuration;
**Figure 4** is a top view of the gauge within a component bore in the insertion configuration; and
**Figure 5** is a section view of the gauge within a component bore in the inspection configuration showing the head passing beyond the restriction.

### Detailed Description

Aspects and embodiments of the present disclosure will now be discussed with reference to the accompanying figures. Further aspects and embodiments will be apparent to those skilled in the art.

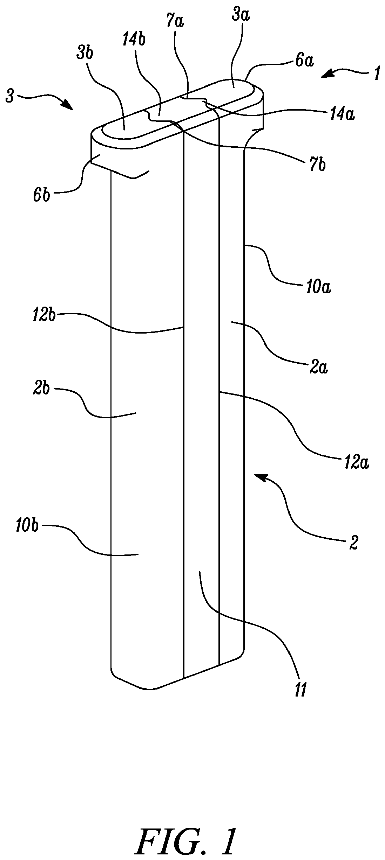

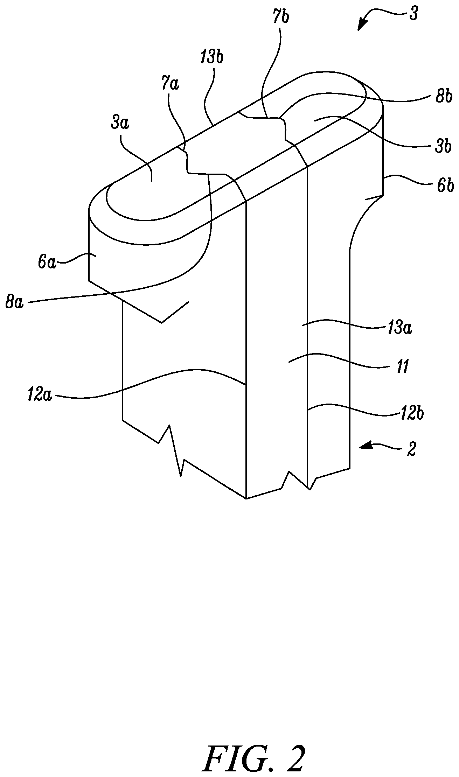

Figures 1 and 2 show perspective views of a gauge 1 in the inspection configuration.

The gauge comprises an elongate rod 2 and a head 3 having a transverse dimension perpendicular to the elongate axis of the rod 2. The head 3 has a larger transverse dimension than the rod 2.

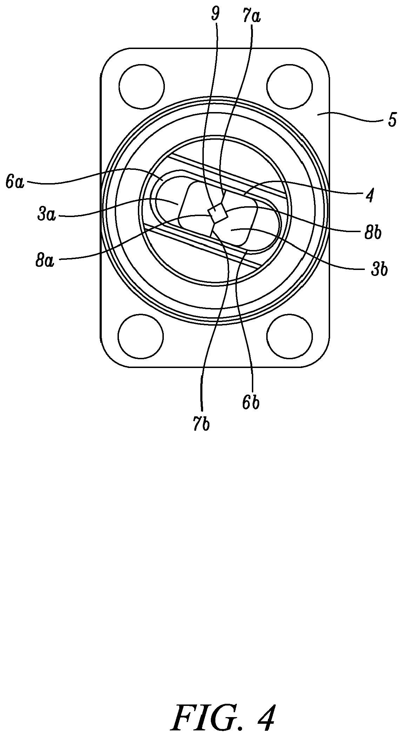

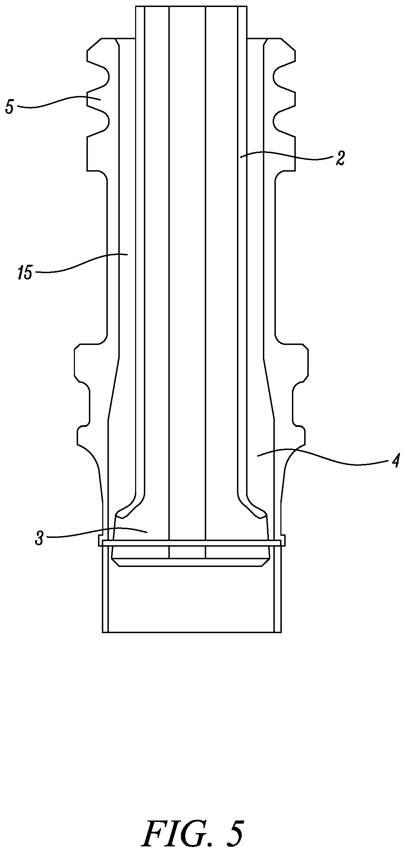

The gauge 1 has an inspection configuration (shown in Figures 1 to 3 & 5) wherein the transverse dimension (and the perimeter) of the head 3 is greater than in an insertion configuration shown in Figure 4.

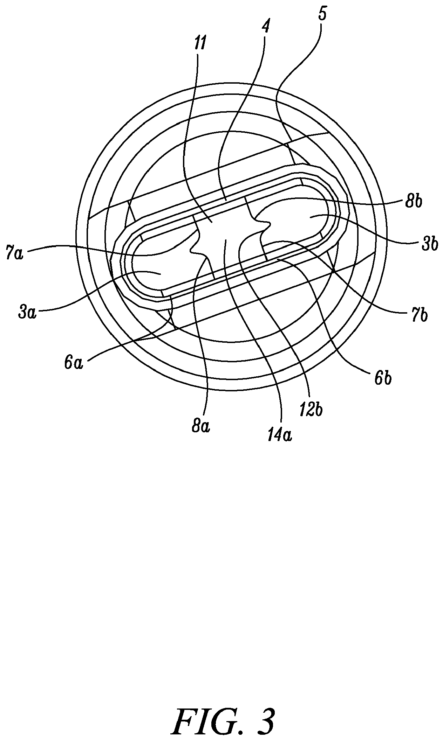

This allows insertion of the gauge 1 into a bore 4 of a gas turbine component 5 (e.g. a low pressure nozzle guide vane vent and oil scavenge pipe) in its reduced size insertion configuration (as shown in Figure 4) so that the head 3 can pass any restriction 15 within the bore 4. Once the restriction has been passed, the gauge 1 can be converted to its inspection configuration (as shown in Figures 3 and 4) to ensure that the bore 4 (at the position to be measured) meets the minimum dimension requirements matching the (larger) transverse dimension of the head 3 in the inspection configuration.

The head 3 comprises two symmetrical head portions 3a, 3b each with a longitudinally-extending outer surface 6a, 6b and longitudinally-extending inner surface 7a, 7b.

The outer surfaces 6a, 6b have curved end portions and substantially planar front/rear portions such that the head 3 has an obround end face.

Each inner surface 7a, 7b comprises an elongate v-shaped channel 8a, 8b that is centrally disposed i.e. equally spaced from the front/rear portions of the respective outer surfaces 6a, 6b.

In the insertion configuration (Figure 4), the inner surfaces 7a, 7b of the head portions 3a, 3b are partly in abutment with each other with the elongate channels 8a, 8b aligned such that a central bore 9 (having a square transverse profile) is provided within the gauge 1.

The rod 2 also comprises two symmetrical rod portions 2a, 2b each with a longitudinally-extending outer surface 10a, 10b and longitudinally-extending inner surface with a centrally disposed v-shaped channel (not shown) that is continuous with the elongate channels 8a, 8b of the head portions 3a, 3b.

Accordingly, the central bore 9 extends through both the head 3 and rod 2.

In the inspection configuration, the inner surfaces 7a, 7b of the head portions 3a, 3b and the inner surfaces of the rod portions 2a, 3b are spaced from each other in a transverse dimension by an elongate insert 11.

The insert 11 has opposing longitudinally-extending transverse surfaces 12a, 12b which, in the inspection configuration abut the inner surfaces 7a, 7b of the head portions 3a, 3b and rod portions 2a, 2b.

The insert also comprises outer front/rear surfaces 13a, 13b which are flush with the outer surfaces 6a, 6b of the head portions 3a, 3b and the rod portions 2a, 2b in the inspection configuration. The outer front/rear surfaces 13a, 13b of the insert and the outer surfaces 6a, 6b of the head portions 3a, 3b are chamfered towards the end face of the head 3 and also towards the rod 2.

Each transverse surface 12a, 12b of the insert 11 (abutting the inner surfaces 7a, 7b of the head portions 3a, 3b in the inspection configuration) has a centrally disposed elongate v-shaped ridge 14a, 14b which is equidistant from each of the outer front/rear surfaces 13a, 13b of the insert 11.

To convert the gauge 1 from the insertion configuration (Figure 4) to the inspection configuration (Figure 3) within the bore, the insert 11 is inserted into the central bore 9 such that the ridges 14a, 14b are received in the channels 8a, 8b on the inner surfaces 7a, 7b of the head portions 3a, 3b and rod portions 2a, 2b. The v-shaped profiles ensure the correct alignment of the insert 11 within the central bore 9 so that the outer (front/rear) surfaces 13a, 13b are flush with the outer surfaces 6a, 6b of the head portions 2a, 2b.

The outer (front/rear) surfaces 13a, 13b of the insert 11 extend the transverse dimension and the perimeter of the head 3 in the inspection configuration to the minimum dimension required for the bore of the component to pass the inspection criteria.

It will be understood that the disclosure is not limited to the embodiments above-described and various modifications and improvements can be made without departing from the concepts described herein within the scope of the following claims.

## Claims

1. A gauge (1) comprising an elongate rod (2) and a head (3);
the rod (2) has an elongate axis;
the head has a transverse dimension perpendicular to the elongate axis of the rod (2); and the gauge has an insertion configuration and an inspection configuration, wherein the transverse dimension of the head (3) is greater in the inspection configuration than in the insertion configuration;
**characterised in that** the head (3) comprises two head portions (3a, 3b) each with a longitudinally-extending outer surface (6a, 6b) and a longitudinally-extending inner surface (7a, 7b) and, in the insertion configuration, the inner surfaces (7a, 7b) of the head portions (3a, 3b) are at least partly in abutment with each other.

2. The gauge of Claim 1, wherein in the inspection configuration, the inner surfaces (7a, 7b) of the head portions (3a, 3b) are spaced from each other in a transverse direction.

3. The gauge of Claim 1 or 2, wherein a transverse dimension of the rod (2) is greater in the inspection configuration than in the insertion configuration.

4. The gauge of Claim 3, wherein the rod (2) comprises two rod portions (2a, 2b) each with a longitudinally-extending outer surface (10a, 10b) and longitudinally-extending inner surface and wherein, in the insertion configuration, the inner surfaces of the rod portions (2a, 2b) are at least partly in abutment with each other.

5. The gauge of Claim 4 wherein, in the inspection configuration, the inner surfaces of the rod portions (2a, 2b) are spaced from each other in a transverse dimension.

6. The gauge of Claim 4 or 5, wherein each head portion (3a, 3b) is integrally formed with one of the rod portions (2a, 2b).

7. The gauge of any preceding Claim, wherein the inner surface of each head/rod portion (3a, 3b; 2a, 2b) comprises an elongate channel (8a, 8b).

8. The gauge of any one of Claims 4 to 7, further comprising an insert (11) for spacing the inner surfaces of the head/rod portions (3a, 3b; 2a, 2b) in the inspection configuration.

9. The gauge of Claim 8, wherein the insert (11) comprises opposing longitudinally-extending transverse surfaces (12a, 12b) which, in the inspection configuration abut the inner surfaces of the head/rod portions (3a, 3b; 2a, 2b).

10. The gauge of Claim 9, wherein each transverse surface (12a, 12b) comprises an elongate ridge (14a, 14b).

11. A method of measuring an internal dimension of a bore (4) within a component (5), the method comprising the steps of:
providing a gauge (1) according to any one of Claims 1 to 10 in the insertion configuration of the gauge;
inserting the gauge (1) into the bore (4) until the head (3) is positioned at the position to be inspected;
converting the gauge (1) to its inspection configuration; and
determining if the position of the bore (4) to be measured has a greater dimension than the transverse dimension of the head (3).

12. The method of Claim 11, wherein converting the gauge to its inspection configuration comprises moving the inner surfaces of the head portions (3a, 3b) from abutment with each other such that they are spaced from each other in a transverse dimension.

13. The method of Claim 11 or 12, further comprising providing an insert (11) and converting the gauge (1) to its inspection configuration by spacing the inner surfaces (7a, 7b) of the head portions (3a, 3b) with the insert.

14. The method of Claim 13, comprising providing the inner surface (7a, 7b) of each head portion (3a, 3b) with an elongate channel (8a, 8b) and providing the insert (11) with opposing longitudinally-extending transverse surfaces (12a, 12b) each having an elongate ridge (14a, 14b) and wherein converting the gauge to its inspection configuration comprises seating the opposing ridges (14a, 14b) in the channels on the inner surfaces (7a, 7b) of the head portions (3a, 3b).

15. The method of any one of Claims 11 to 14, wherein the component (5) is a gas turbine component.
